# EUROPÄISCHE PATENTSCHRIFT

(11) **EP 2 532 058 B1**
(45) Veröffentlichungstag und Bekanntmachung des Hinweises auf die Patenterteilung: **19.08.2020**
(21) Anmeldenummer: 11701244.3
(22) Anmeldetag: 20.01.2011
(51) Int. Cl.: H01S 3/223, H01S 3/036, F04D 29/051, F04D 29/057, F04D 17/16

(54) **GASLASER MIT RADIAL- UND AXIALGASLAGER**
GAS LASER HAVING RADIAL AND AXIAL GAS BEARINGS
LASER À GAZ POURVU D'UN PALIER À GAZ RADIAL ET D'UN PALIER À GAZ AXIAL

(30) Priorität: 03.02.2010 DE 102010001538
(43) Veröffentlichungstag der Anmeldung: 12.12.2012
(73) Patentinhaber: TRUMPF Schweiz AG, 7214 Grüsch (CH)
(72) Erfinder: LEHR, Andreas, 6313 Edlibach (CH); BON, Patrick, 8810 Horgen (CH); KENWORTHY MOLYNEAUX, Alexander, 1512 Chavannes (CH)
(74) Vertreter: Kohler Schmid Möbus Patentanwälte
(86) Internationale Anmeldenummer: PCT/EP2011/050787
(87) Internationale Veröffentlichungsnummer: WO 2011/095400

(56) Entgegenhaltungen:
- EP-A1- 1 205 678
- EP-A2- 0 298 437
- JP-A- 2005 155 894
- US-A- 3 532 444
- US-A- 3 832 084
- US-A- 5 980 114

## Beschreibung

Die Erfindung betrifft einen Gaslaser wie in Anspruch 1 definiert. Weitere Ausführungen sind in den abhängigen Ansprüchen definiert.

Ein derartiger Gaslaser und Verfahren zu dessen Betrieb sind beispielsweise durch die DE 36 00 125 A1 bekanntgeworden.

Gaslaser und Verfahren zu deren Betrieb sind allgemein bekannt. Bekannte Gaslaser umfassen ein Gebläse zum Umwälzen des Lasergases, wobei das Gebläse eine Welle aufweist, die über mindestens ein Radiallager und mindestens ein Axiallager gelagert ist. Die Lager können dabei als elektromagnetische Lager ausgebildet sein. Diese weisen ein großes Lagerspiel auf, und es muss eine Sensorik, Aktorik und eine Regelelektronik zur Erfassung und Regelung der Position der Welle in axialer beziehungsweise radialer Richtung vorgesehen sein, weil die Lager von sich aus keine stabile Lage der Welle in axialer und radialer Richtung vorgeben. Bekannte Verfahren müssen entsprechende Logikschleifen zur aktiven Regelung der Lage der Welle umfassen.

Die Lager können auch als Gaslager ausgebildet sein. Eine solche Lagerung ist aus der DE 36 00 125 A1 bekannt. Gegenstand dieser Schrift ist ein Gebläse zum Umwälzen großer Gasmengen, insbesondere für Hochleistungs-Laser. Das Gebläse weist dabei eine Welle auf, die über zwei Radialgaslager und ein Axialgaslager gelagert ist. Die Radialgaslager sind als Fischgrät-Luftlager ausgebildet, die von einer durch Spiralnuten an der Unterseite eines Radialförderers gebildeten Pumpe mit Luft versorgt werden. Diese Spiralnuten am oberen Ende der Welle dienen auch als Axialgaslager für die Welle. Durch den Radialförderer wird Gas gefördert. Dabei ergibt sich das Problem, dass auf den Radialförderer nach oben hin gerichtete Saugkräfte, sowie die Kraft des Axialgaslagers einwirken. Dem wirkt die nach unten gerichtete Gewichtskraft entgegen, wobei bei immer höheren Drehzahlen die beiden nach oben gerichteten Kräfte mehr und mehr überwiegen. Dieses Problem wird mit Hilfe eines zusätzlichen Axialmagnetlagers am unteren Wellenende gelöst. Bei niedrigen Drehzahlen überwiegt dagegen die Gewichtskraft, was besonders beim An- oder Auslaufen des Gebläses ein Problem darstellt. Dieses Problem wird durch eine Druckluftpumpe, die bei kleinen Drehzahlen einen Überdruck einstellt, oder einen Elektromagneten gelöst.

Aus der US 3 532 444 A ist weiterhin eine Anlage zum Fördern, Verdichten bzw. Umwälzen von Gasen mit einem durch einen Elektromotor angetriebenen Gebläse bekannt, welches einen Rotor und einen Gebläseläufer aufweist. Der Rotor und der Gebläseläufer sitzen auf einer Welle, die in gasgeschmierten Radialgaslagern gelagert ist. Der Axialschub des Gebläses wird auf einem ebenfalls gasgeschmierten Axialgaslager abgestützt.

JP2005155894 offenbart ein Gebläse mit einer Welle, die über einen Radialgaslager und einen Axialgaslager gelagert ist.

Demgegenüber ist die Aufgabe der Erfindung, einen Gaslaser der eingangs genannten Art dahingehend weiterzubilden, dass das mindestens eine Axiallager als reines Gaslager ausgestaltet und die Ausrichtung bzw. Stabilität des Rotors verbessert werden kann.

Diese Aufgabe wird durch den Gegenstand des Anspruchs 1 gelöst.

Die Erfindung hat den Vorteil, dass ein axiales Auswandern der Welle mit Hilfe eines einfach und kompakt aufgebauten, reinen Gaslagers verhindert wird. Bewegt sich die Welle in axialer Richtung, so wird auf der jeweils in dieselbe Richtung weisenden Seite der Scheibe des Axialgaslagers ein entsprechend hoher Gegendruck erzeugt, so dass sich die Welle in ihre Ausgangslage zurückbewegt. Beginnt sich die Welle zu drehen, so wird durch die Nuten Gas befördert, wodurch sich ein Gaskissen ausbildet, das die Welle in axialer Richtung abfedert. Erhöht sich die Drehzahl, so erhöht sich der Druck des Gaskissens, so dass unabhängig von der Drehzahl die Welle immer optimal gelagert ist. Das Lager stabilisiert sich somit selbst, und es wird auf eine Lagerelektronik, Sensorik und Aktorik und die damit verbundenen Komponenten, wie Sensor- bzw. Aktorkabel verzichtet. Ein weiterer Vorteil eines solchen Lagers ergibt sich daraus, dass das Lagerspiel sehr klein gehalten werden kann, was einer der Gründe dafür ist, dass Gas mit einer Kompressibilitätszahl im Bereich von 200-600 als Lagermedium verwendet werden kann. Das sehr geringe Lagerspiel ermöglicht es, auf Notlauflager zu verzichten und einen hohen Wirkungsgrad zu erzielen. Des Weiteren zeichnet sich ein solches Lager durch Wartungsfreiheit, Verschleißfreiheit und Temperaturunempfindlichkeit aus.

Das eine oder die mehreren ringförmigen Elemente führen zu einer verbesserten Ausrichtung bzw. Stabilität des Rotors. Besonders bevorzugt ist dabei eine Ausführungsform, in der dieses ringförmige Element aus einem elastischen Material besteht, bzw. es sich dabei um einen O-Ring handelt.

In einem weiteren Beispiel, das nicht unter dem Umfang von Anspruch 1 fällt, ist das Nutenmuster als Spiralnutenmuster ausgebildet. Beim Anlaufen der Welle wird durch die Spiralnuten Gas befördert, das z.B. in einem unstrukturierten Bereich, der sich an den mit Spiralnuten versehenen Bereich in radialer Richtung anschließt, ein Gaskissen ausbilden kann, das die Welle trägt, bzw. ihr Auswandern verhindert.

Erfindungsgemäß ist das Nutenmuster der rotierenden Scheibe als Fischgrät-Nutenmuster ausgebildet. In diesem Fall wird Gas sowohl von der Außen- als auch von der Innenseite der Scheibe her gleichzeitig durch die Nuten z. B. zu einem unstrukturierten Bereich hin befördert, der sich zwischen den radial versetzt angeordneten Nutenbereichen befindet. Außen bzw. innen bezieht sich dabei auf die radiale Richtung der Scheibe. Dieser Bereich kann in einer anderen bevorzugten Ausführungsform fehlen, wobei in diesem Fall die Nuten Gas zu einem Kreis hin fördern, der durch die Schnittpunkte der spitzwinklig aufeinander zu laufender Nuten gebildet wird. In diesen beiden bevorzugten Ausführungsformen bildet sich das Gaskissen über bzw. unter dem unstrukturierten Bereich bzw. dem Kreis, der durch die Schnittpunkte der spitzwinklig aufeinander zu laufender Nuten gebildet wird, aus. In diesem Bereich ist der Druck maximal. Durch eine solche Ausgestaltung des Nutenmusters werden die Lagereigenschaften des Lagers verbessert, insbesondere auch im Hinblick auf den Betrieb bei Kompressibilitätszahlen des Gases im Bereich von 200-600.

Vorzugsweise nimmt die Nuttiefe zu einem Übergangsbereich hin, der sich zwischen den radial versetzt zueinander angeordneten Nuten befindet, ab. Auf diese Weise kann schon bei geringen Drehzahlen in Regionen flacher Nuttiefe Druck aufgebaut werden, wodurch die Welle früher abhebt und die Start- bzw. Stoppeigenschaften des Gebläses optimiert werden. Bei konstanter Drehzahl wird bei ansonsten gleichen Bedingungen ein höherer Druck aufgebaut.

In einer bevorzugten Ausführungsform ist auch das Radiallager als Radialgaslager ausgebildet, wobei die Mantelfläche der Welle ein axial versetzt angeordnetes Fischgrät-Nutenmuster aufweist, welches zwischen den axial versetzt angeordneten Nutenbereichen z. B. eine unstrukturierte Fläche aufweisen kann. Gas wird durch die beiden Nutbereiche gleichzeitig zu diesem Bereich hin befördert, so dass sich hier eine Region maximalen Drucks ausbildet. Diese Nuten weisen bevorzugt einen Gradienten im Hinblick auf die Nuttiefe auf, wobei die Nuttiefe zu dem Bereich maximalen Drucks hin abnimmt. Da sich in den Bereichen mit flacheren Nuten ein höherer Druck ausbilden kann, werden die Lagereigenschaften und insbesondere die Start- bzw. Stoppeigenschaften des Radialgaslagers nachhaltig verbessert.

Die Nuttiefe kann dabei stufenlos oder in Stufen abnehmen. Die Nuten sind sehr präzise und flach gearbeitet, ihre Tiefe beträgt bevorzugt zwischen ca. 25 und ca. 10 Mikrometern, wodurch sich die Lagereigenschaften verbessern. Sie werden vorzugsweise in Hartmetallen oder Keramiken durch Oberflächenverdampfung mittels eines Ultrakurzpulslasers eingebracht. Dieses Verfahren hat den Vorteil, dass das Material in den Nuten so abgetragen wird, dass sich im Betrieb keine Partikel aus dem Werkstoff lösen können.

In einer bevorzugten Ausführungsform kann die stationäre oder die rotierende Lagerfläche des Axialgaslagers konvex ausgebildet sein, wobei die Konvexität vorzugsweise ca. 1 Mikrometer beträgt. Dies führt dazu, dass sich in den Bereichen, in denen die stationäre oder die rotierende Lagerfläche sehr flach ist, ein höherer Druck ausbilden kann, wodurch die Welle schon bei geringen Drehzahlen abhebt und die Start- bzw. Stoppeigenschaften verbessert werden.

Vorzugsweise werden eines oder mehrere der Gaslager sowohl als passive Gaslager als auch als aktive Gaslager betrieben. Somit können je nach Bedarf die Vorteile einer passiven als auch einer aktiven Lagerung genutzt werden. Im Betrieb als passives Gaslager stabilisiert sich das Lager als Funktion der Drehzahl selbst. Im Betrieb als aktives Gaslager können die Lagereigenschaften gezielt beeinflusst werden.

Vorzugsweise kann mindestens eines der Lager mit externem Druck beaufschlagt und so als aktives Gaslager betrieben werden. Hierdurch wird in dem mit Druck beaufschlagten Lager gezielt ein genau definierter Druck eingestellt, der sich von den Druckniveaus aller anderen Gaslager unterscheidet. Mit der gezielten Druckbeaufschlagung einzelner Lager können gezielt Lagereigenschaften, wie z. B. Steifigkeit oder Dämpfung, in jedem Betriebszustand beeinflusst werden.

Vorzugsweise wird der Druck, mit dem das oder die als aktive Gaslager betriebenen Lager beaufschlagt werden, der Druckseite des Gebläses entnommen. Das weist den Vorteil auf, dass keine externe Druckgasquelle notwendig ist.

Vorzugsweise erfolgt die Beaufschlagung des oder der Lager mit externem Druck durch Löcher, deren Durchmesser bevorzugt ca. 50 Mikrometer beträgt. Hierdurch ist es möglich, den Druck und den Volumenstrom, mit dem das oder die Lager beaufschlagt werden, genau zu definieren und zu steuern, so dass prinzipiell auf eine Lagerelektronik, Sensorik und Aktorik verzichtet werden kann. Es ist so möglich, die dynamischen Eigenschaften der Lager in allen Betriebspunkten zu beeinflussen. So kann die Welle beispielsweise bei Stillstand oder bei geringen Drehzahlen zum Schweben gebracht werden.

Vorzugsweise werden die Radialgaslager als Dichtung gegen den Umgebungsdruck verwendet. Durch die Ausgestaltung der rotierenden Lagerfläche mit einem Fischgrät-Nutmuster erfolgt kein Nettomassenstrom durch das Lager und man erhält so eine berührungslose, dynamische Dichtung, die gegen Druckdifferenzen in Höhe des Drucks, der durch die Nuten aufgebaut wird, dichtet. Es kann so auf andere Dichtmittel, wie beispielsweise einen O-Ring, verzichtet werden. Die so beschriebene Dichtung kann prinzipiell auch unabhängig von der sonstigen Lagerung verwendet werden.

Weitere Vorteile der Erfindung ergeben sich aus der Beschreibung und den Zeichnungen.

Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen CO₂-Gaslaser mit einem gefalteten Laserresonator nach dem Stand der Technik;
- Fig. 2: ein Radialgebläse des erfindungsgemäßen CO₂-Gaslasers;
- Fig. 3a, 3b: Detailansichten eines in Fig. 2 gezeigten Radialgaslagers;
- Fig. 4: eine rotierende Scheibe eines in Fig. 2 gezeigten Axialgaslagers in der Draufsicht;
- Fign. 5a, 5b: zwei unterschiedliche Ausgestaltungen von Nuten in der in Fig. 4 gezeigten Scheibe des Axialgaslagers in einer Detailansicht gemäß V in Fig. 4; und
- Fig. 6: Axialstatoren eines in Fig. 2 gezeigten Axialgaslagers.

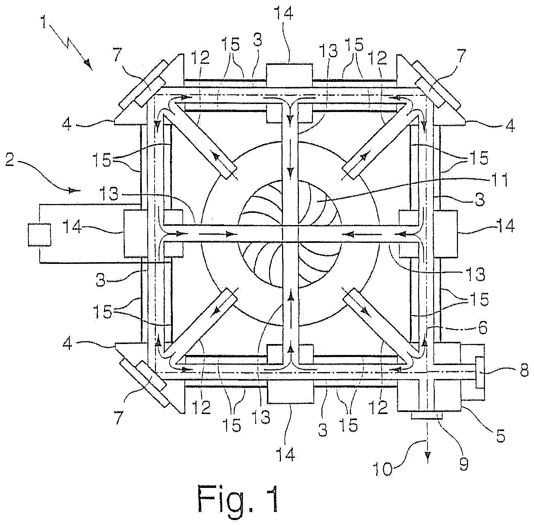

Der in **Fig. 1** gezeigte CO₂-Gaslaser **1** weist einen quadratisch gefalteten Laserresonator **2** mit vier sich aneinander anschließenden Laserentladungsrohren **3** auf, die über Eckgehäuse **4, 5** miteinander verbunden sind. Ein in Richtung der Achsen der Laserentladungsrohre 3 verlaufender Laserstrahl **6** ist strichpunktiert dargestellt. Umlenkspiegel **7** in den Eckgehäusen 4 dienen der Umlenkung des Laserstrahls 6 um jeweils 90°. Im Eckgehäuse 5 sind ein Rückspiegel **8** und ein für die Laserwellenlänge teiltransmissiver Auskoppelspiegel **9** angeordnet. Der Rückspiegel 8 ist für die Laserwellenlänge hochreflektierend ausgebildet und reflektiert den Laserstrahl 6 um 180°, so dass die Laserentladungsrohre 3 in entgegen gesetzter Richtung erneut durchlaufen werden. Ein Teil des Laserstrahles 6 wird an dem teiltransmissiven Auskoppelspiegel 9 aus dem Laserresonator 2 ausgekoppelt, der andere reflektierte Teil verbleibt im Laserresonator 2 und durchläuft die Laserentladungsrohre 3 erneut. Der über den Auskoppelspiegel 9 aus dem Laserresonator 2 ausgekoppelte Laserstrahl ist mit **10** bezeichnet. Im Zentrum des gefalteten Laserresonators 2 ist als Druckquelle für Lasergas ein Radialgebläse **11** angeordnet, das über Zufuhrleitungen **12** für Lasergas mit den Eckgehäusen 4, 5 in Verbindung steht. Absaugleitungen **13** verlaufen zwischen Absauggehäusen **14** und dem Radialgebläse 11. Die Strömungsrichtung des Lasergases im Innern der Laserentladungsrohre 3 sowie in den Zufuhr- und Absaugleitungen 12, 13 ist durch Pfeile veranschaulicht. Die Anregung des Lasergases erfolgt über Elektroden **15,** die benachbart zu den Laserentladungsrohren 3 angeordnet sind.

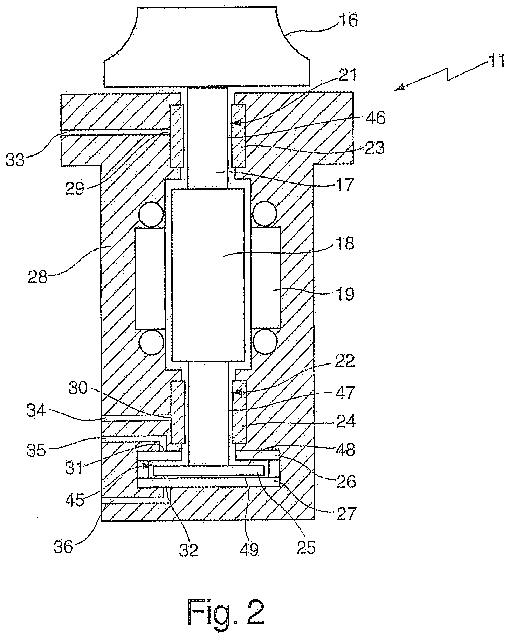

In dem in **Fig. 2** gezeigten Radialgebläse 11 wird das Lasergas vom Laufrad **16** radial beschleunigt in die Zufuhrleitungen 12 zu den Eckgehäusen 4, 5 gelenkt. Das Laufrad 16 sitzt auf einer Welle **17,** welche in ihrem mittleren Bereich von einem Motor, gebildet durch Rotor **18** und Stator **19,** angetrieben wird. Der Bereich, der von der Welle 17 her gesehen außerhalb des Laufrades 16 angeordnet ist, bildet die Druckseite des Gebläses 11. Im oberen und im unteren Bereich der Welle 17, wobei sich hier oben bzw. unten auf die entsprechende Lage der einzelnen Komponenten in der Abbildung bezieht, ist jeweils ein Radiallager **21** und **22** angeordnet. Die stationäre Lagerfläche wird im Folgenden als Radialstator **23** und **24** bezeichnet. Die Welle 17 ist an ihrem unteren Ende mit einer Scheibe **25** versehen, welche einen größeren Durchmesser als die Welle 17 selbst aufweist und deren Lagerflächen **48, 49** den rotierenden Teil eines Axialgaslagers **45** der Welle 17 bilden. Die Scheibe 25 wird an ihrer Ober- und an ihrer Unterseite von stationären Lagerflächen, die im Folgenden als Axialstatoren **26** und **27** bezeichnet werden, umfasst, welche so miteinander verbunden sind, dass der Raum, in dem sich die Scheibe 25 befindet, zum Lagergehäuse **28** hin abgeschlossen ist. Die Radial- bzw. Axialstatoren 23, 24, 26, 27 weisen jeweils ein oder mehrere sehr kleine Löcher **29, 30, 31, 32** auf, durch welche sie über je einen der Kanäle **33, 34, 35, 36** mit einer nicht näher gezeigten Druckgasquelle verbunden werden können. Der Durchmesser der Löcher 29, 30, 31, 32 ist bevorzugt kleiner als 50 Mikrometer.

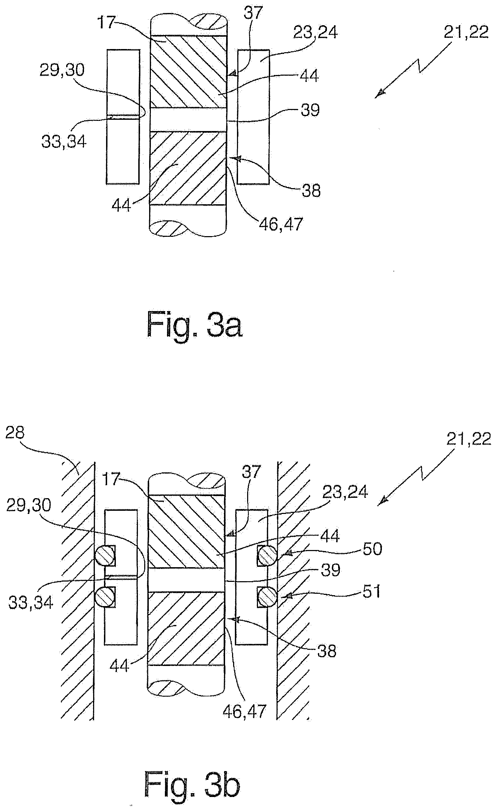

In **Fig. 3a** ist eines der beiden in Fig. 2 gezeigten Radialgaslager 21 im Detail dargestellt. Die Welle 17 ist mit zwei axial versetzt angeordneten Bereichen **37, 38** schräger Nuten versehen, wobei die einzelnen Nuten **44** der beiden Nutenbereiche 37, 38 jeweils so zueinander stehen, dass ein Fischgrätmuster entsteht, wenn man die beiden Nutenbereiche 37, 38 gemeinsam betrachtet. Zwischen den beiden Nutenbereichen 37, 38 schräger Nuten ist bevorzugt ein nicht mit Nuten versehener, ebener Zwischenbereich **39** angeordnet. In einer nicht gezeigten Ausführungsform fehlt dieser Zwischenbereich, und die Nuten der beiden Nutenbereiche 37, 38 treffen auf gleicher axialer Höhe im spitzen Winkel aufeinander. Der Radialstator 23 bzw. 24 ist durch einen schmalen Spalt von der durch die Welle gebildeten rotierenden Fläche **46, 47** getrennt. Beginnt nun die Welle 17 zu rotieren, so wird Gas durch die Nutenbereiche 37 und 38 zum ebenen Zwischenbereich 39 hin befördert. Dabei bildet sich ein Bereich (Gaskissen) maximalen Druckes zwischen den beiden Nutbereichen 37 und 38, also auf dem ebenen Zwischenbereich 39 aus, wodurch die Welle 17 radial gelagert ist. Die Druckverhältnisse des Radialgaslagers entlang der Welle gliedern sich somit in jeweils eine Druckaufbauzone im Bereich der Nuten 37 und 38 und einen Bereich gleich bleibenden, maximalen Drucks im Zwischenbereich 39. In den Radialstatoren 23 bzw. 24 sind im Bereich des maximalen Drucks ein oder mehrere sehr kleine Löcher 29, 30 eingebracht, durch die das Lager über die Kanäle 33, 34 mit externem Druck beaufschlagt werden kann. In einer weiteren, in **Fig. 3b** gezeigten Ausführungsform wird der Radialstator 23 bzw. 24 auf der Gehäuseseite 28 von je zwei ringförmigen Elementen **50, 51,** wie z. B. zwei O-Ringen, umfasst, die sich jeweils etwas oberhalb bzw. etwas unterhalb der Auslasskanäle 33, 34 befinden und den Radialstator 23 bzw. 24 gegenüber der Gehäuseseite 28 abdichten. Oberhalb bzw. unterhalb bezieht sich dabei auf die Lage in der entsprechenden Zeichnung. Analog dazu werden in einer nicht gezeigten Ausführungsform die Axialstatoren 26, 27 von einem oder mehreren ringförmigen Elementen umfasst.

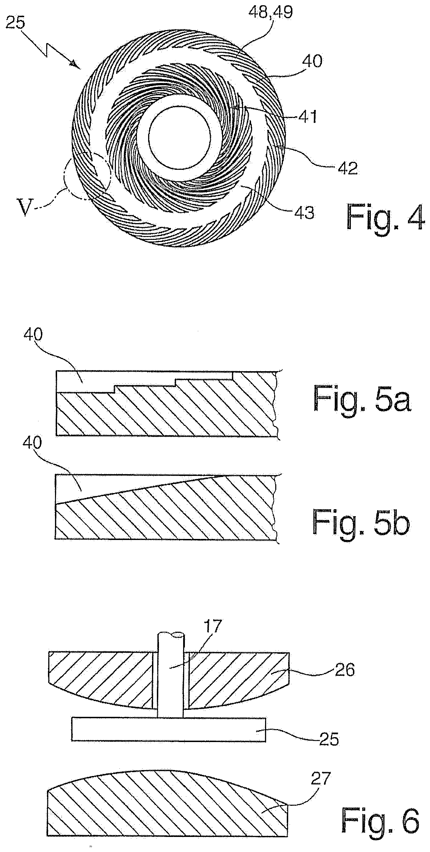

**Fig. 4** zeigt die rotierende Scheibe 25 des Axialgaslagers 45, die beidseitig, also auf ihren beiden rotierenden Lagerflächen 48, 49, gleich strukturiert ist. Jede Seite weist spiralförmige Nuten **40** auf, welche in zwei radial versetzten Bereichen **41, 42** angeordnet sind. Betrachtet man diese beiden Bereiche gemeinsam, so ergibt sich ein Fischgrätmuster aus gegenläufigen, spiralförmigen Nuten. Zwischen diesen beiden Nutenbereichen 41, 42 befindet sich ein ebener, nicht mit Nuten versehener, ebener Zwischenbereich **43.** In einer nicht gezeigten Ausführungsform fehlt dieser Bereich, und die Nuten treffen entlang eines Kreises im spitzen Winkel aufeinander. Beginnt die Scheibe 25 zu rotieren, so wird aufgrund der Drehbewegung durch die Nuten 40 gleichzeitig sowohl von außen als auch von innen her zu dem mittleren, ebenen Zwischenbereich 43 hin Gas befördert, wobei mit den Begriffen "innen" bzw. "außen" der Scheibenmittelpunkt bzw. die Außenseite der Scheibe 25 in radialer Richtung gemeint ist. Der Zwischenbereich 43 bildet so den Bereich maximalen Drucks, wodurch die Scheibe 25 und damit die Welle 17 axial gelagert sind. Bei konstanter Drehzahl bleibt dieser Druck gleich. Die Druckverhältnisse des Axialgaslagers in radialer Richtung gliedern sich in jeweils eine Druckaufbauzone in den Nutenbereichen 41, 42 und einen Zwischenbereich 43 maximalen Drucks. In die Axialstatoren 26, 27 sind im Zwischenbereich 43 jeweils ein oder mehrere Löcher 31, 32 eingebracht, durch die das Lager zusätzlich mit externem Druck beaufschlagt werden kann.

In einer nicht näher gezeigten Ausführungsform ist die Scheibe 25 beidseitig mit einem Spiralmuster nach innen gerichteter Nuten versehen, an die sich zum Scheibenmittelpunkt hin ein ringförmiger unstrukturierter Bereich anschließt.

**Fign. 5a, 5b** zeigen zwei unterschiedliche Ausgestaltungen der Nuten 40, die in Längsrichtung mit einem Gradienten bezüglich ihrer Tiefe versehen sind. Dabei kann die Nuttiefe eine oder mehrere Stufen aufweisen (Fig. 5a) oder übergangslos vom Niveau der Welle bzw. der Scheibe bis hin zu ihrer Nominaltiefe verlaufen (Fig. 5b). Hierdurch werden die Lagereigenschaften des Axialgaslagers insgesamt verbessert, da die Bereiche flacherer Nuttiefe im Vergleich zu Bereichen mit tieferen Nuten bereits bei vergleichsweise geringen Drehzahlen einen vergleichsweise hohen Druck aufweisen. Des Weiteren werden so die Start-/Stoppeigenschaften des Axialgaslagers verbessert, da in den Bereichen flacherer Nuttiefe bereits bei geringen Drehzahlen Druck aufgebaut wird.

Wie in **Fig. 6** gezeigt, kann mindestens einer der beiden Axialstatoren 26, 27 leicht konvex ausgebildet sein. Dadurch werden die Berührungsfläche der Axialstatoren 26, 27 mit der rotierenden Scheibe 25 und damit der Anlaufwiderstand verringert. Durch den schmalen Spalt wird bereits bei geringen Drehzahlen Gas durch die Nuten gefördert, so dass früher ein Druckaufbau stattfindet und sich die Drehzahl, bei der die Welle abhebt, reduziert. Der gleiche Effekt lässt sich erzielen, indem die Scheibe 25 auf einer oder beiden Seiten leicht konvex gearbeitet ist.

Die Radial- und Axialstatoren 23, 24, 26, 27 sind im Bereich maximalen Drucks mit einem oder mehreren sehr kleinen Löchern 29, 30, 31, 32 versehen, durch die ein genau definierter Volumenstrom bei einem genau definierten Druck eingebracht werden kann, so dass die Welle 17 auch im Stillstand oder bei sehr geringen Drehzahlen zum Schweben gebracht wird.

Das Radialgebläse 11 ist somit in 5 Achsen bidirektional gasgelagert, wobei in seiner besonders bevorzugten Ausführungsform sich das Druckniveau der Lager als Funktion der Drehzahl selbst einstellt, das heißt, es kann als rein passives Gaslager betrieben werden. In diesem Betriebszustand hebt auch die Welle allein in Abhängigkeit von ihrer Drehzahl ab. Es handelt sich somit um eine selbststabilisierende Lagerung, die ohne aktive Regelung auskommt. Durch das Zusammenwirken der vorteilhaften Merkmale des Gaslasers ergibt sich, dass eine solche Lagerung sowohl im passiven als auch im aktiven Betrieb vorzugsweise bei niedrigen Drücken (>50 hPa) und sehr dünnen Gasen (Normdichte 0.55 kg/m³) eingesetzt werden kann. Die Kompressibilitätszahl des Gases liegt bei diesen Bedingungen im Bereich von 200 bis 600.

## Patentansprüche

1. Gaslaser (1) mit einem Gebläse (11) zum Umwälzen von Lasergas, wobei das Gebläse (11) eine Welle (17) aufweist, die über mindestens ein Radialgaslager (21, 22) sowie mindestens ein Axialgaslager (45) gelagert ist,
wobei das Radialgaslager über mindestens eine stationäre (23, 24) und mindestens eine rotierende (46, 47) Lagerfläche verfügt und dessen rotierende Lagerfläche mit einem Fischgrät-Nutenmuster (37, 38) versehen ist,
wobei
das Axialgaslager (45) zwei rotierende Lagerflächen (48, 49) und zwei stationäre Lagerflächen (26, 27) aufweist, die auf den beiden Seiten einer Scheibe (25) angeordnet sind,
die eine oder beide rotierenden Lagerflächen (48, 49) des Axialgaslagers (45) mit einem Fischgrät-Nutenmuster (41, 42) strukturiert sind,
wobei sich in der mindestens einen stationären Lagerfläche (23, 24) des Radialgaslagers (21, 22) und in den stationären Lagerflächen (26, 27) des Axialgaslagers (45) jeweils mindestens ein Auslasskanal (33, 34, 35, 36) zur Beaufschlagung mit externem Druck befindet, und
wobei
mindestens eine der stationären Lagerflächen (23, 24) des mindestens einen Radialgaslagers (21, 22) und bzw. oder des Axialgaslagers (45) in Umfangsrichtung von je zwei ringförmigen Elementen (50, 51), insbesondere aus einem elastischen Material, umfasst ist,
und wobei die zwei ringförmigen Elemente sich oberhalb bzw. unterhalb eines Auslasskanals (33, 34, 35, 36) befinden.

2. Gaslaser nach Anspruch 1, **dadurch gekennzeichnet, dass** das Fischgrät- Nutenmuster (41, 42) des Axialgaslagers (45) einen radial mittleren, nicht mit Nuten versehenen Zwischenbereich (43) aufweist.

3. Gaslaser nach einem der vorhergehenden Ansprüche, **dadurch gekennzeichnet, dass** die Nuttiefe, insbesondere zur Welle (17) hin, abnimmt.

4. Gaslaser nach einem der vorhergehenden Ansprüche, **dadurch gekennzeichnet, dass** die Nuttiefe entlang der Nut (40) abnimmt, insbesondere jeweils zu einem nicht mit Nuten versehenen Bereich (43) hin, der sich zwischen radial zwischen den beiden Nutenmustern des Fischgrät-Nutenmusters (41, 42) befindet.

5. Gaslaser nach einem der vorhergehenden Ansprüche, wobei die Nuttiefe des Fischgrät-Nutenmuster (37, 38) entlang der Nut abnimmt, insbesondere zu einem nicht mit Nuten versehenen Zwischenbereich (39) hin, der sich zwischen den beiden Nutenmustern des Fischgrät-Nutenmusters (37, 38) befindet.

6. Gaslaser nach Anspruch 5, **dadurch gekennzeichnet, dass** die Nuttiefe im axial versetzt angeordneten Fischgrät-Nutenmuster (37, 38) jeweils stufenlos abnimmt.

7. Gaslaser nach Anspruch 5, **dadurch gekennzeichnet, dass** die Nuttiefe im axial versetzt angeordneten Fischgrät-Nutenmuster (37, 38) jeweils stufenweise abnimmt.

8. Gaslaser nach einem der vorhergehenden Ansprüche, **dadurch gekennzeichnet, dass** die Nuttiefe weniger als ca. 50 Mikrometer, jedoch mehr als ca. 5 Mikrometer, besonders bevorzugt weniger als 25 Mikrometer und mehr als 10 Mikrometer, beträgt.

9. Gaslaser nach einem der vorhergehenden Ansprüche, **dadurch gekennzeichnet, dass** die Nuten (40, 44) mittels eines Ultrakurzpulslasers eingebracht sind.

10. Gaslaser nach einem der vorhergehenden Ansprüche, **dadurch gekennzeichnet, dass** mindestens eine der Lagerflächen (26, 27, 48, 49) des Axialgaslagers (45) konvex ausgebildet ist.

## Claims

1. Gas laser (1) comprising a fan (11) for circulating laser gas, the fan (11) having a shaft (17) which is supported by means of at least one radial gas bearing (21, 22) and at least one axial gas bearing (45), wherein the radial gas bearing comprises at least one stationary (23, 24) bearing face and at least one rotating (46, 47) bearing face, and the rotating bearing face of which has a fish-bone groove pattern (37, 38),
wherein the axial gas bearing (45) has two rotating bearing faces (48, 49) and two stationary bearing faces (26, 27) which are arranged at both sides of a plate (25), one or both rotating bearing faces (48, 49) of the axial gas bearing (45) are structured with a fish-bone groove pattern (41, 42), wherein the at least one stationary bearing face (23, 24) of the radial gas bearing (21, 22) and the stationary bearing faces (26, 27) of the axial gas bearing (45) each comprise at least one outlet channel (33, 34, 35, 36) for applying an external pressure, and
wherein at least one of the stationary bearing faces (23, 24) of the at least one radial gas bearing (21, 22) and/or of the axial gas bearing (45) is surrounded in the peripheral direction by two annular elements (50, 51) in each case, in particular from an elastic material,
and wherein the two annular elements are located above or below an outlet channel (33, 34, 35, 36).

2. Gas laser according to claim 1, **characterised in that** the fish-bone groove pattern (41, 42) of the axial gas bearing (45) has a radially central intermediate region (43) which is not provided with grooves.

3. Gas laser according to any one of the preceding claims, **characterised in that** the groove depth decreases, in particular in the direction towards the shaft (17).

4. Gas laser according to any one of the preceding claims, **characterised in that** the groove depth decreases along the groove (40), in particular in each case in the direction towards a region (43) which is not provided with grooves and which is located radially between the two groove patterns of the fish-bone groove pattern (41, 42).

5. Gas laser according to any one of the preceding claims, wherein the groove depth of the fish-bone groove pattern (37, 38) decreases along the groove, in particular in the direction towards an intermediate region (39) which is not provided with grooves and which is located between the two groove patterns of the fish-bone groove pattern (37, 38).

6. Gas laser according to claim 5, **characterised in that** the groove depth in the axially offset fish-bone groove pattern (37, 38) decreases in a stepless manner in each case.

7. Gas laser according to claim 5, **characterised in that** the groove depth in the axially offset fish-bone groove pattern (37, 38) decreases in a stepped manner in each case.

8. Gas laser according to any one of the preceding claims, **characterised in that** the groove depth is less than approximately 50 micrometres, but more than approximately 5 micrometres, in a particularly preferred manner less than 25 micrometres and more than 10 micrometres.

9. Gas laser according to any one of the preceding claims, **characterised in that** the grooves (40, 44) are formed by means of an ultra-short pulsed laser.

10. Gas laser according to any one of the preceding claims, **characterised in that** at least one of the bearing faces (26, 27, 48, 49) of the axial gas bearing (45) is constructed in a convex manner.

## Revendications

1. Laser à gaz (1) équipé d'un ventilateur (11) dévolu à la mise en circulation de gaz laser, ledit ventilateur (11) comportant un arbre (17) monté par l'intermédiaire d'au moins un palier radial à gaz (21, 22), ainsi que d'au moins un palier axial à gaz (45),
ledit palier radial à gaz étant au moins pourvu de surfaces d'appui fixe (23, 24) et rotative (46, 47), et sa surface d'appui rotative étant munie d'un motif (37, 38) à rainurage en chevrons,
ledit palier axial à gaz (45) comptant deux surfaces d'appui rotatives (48, 49) et deux surfaces d'appui fixes (26, 27), qui sont disposées sur les deux faces d'un disque (25), l'une desdites surfaces d'appui rotatives (48, 49) dudit palier axial à gaz (45), ou les deux, étant profilée(s) avec un motif (41, 42) à rainurage en chevrons,
sachant qu'au moins un canal de sortie (33, 34, 35, 36), affecté à la sollicitation par une pression extérieure, se trouve à chaque fois dans la surface d'appui fixe (23, 24) à présence minimale sur le palier radial à gaz (21, 22), et dans les surfaces d'appui fixes (26, 27) du palier axial à gaz (45),
sachant qu'au moins l'une des surfaces d'appui fixes (23, 24) du palier radial à gaz (21, 22) à présence minimale et/ou du palier axial à gaz (45) est ceinturée, dans le sens périphérique, par deux éléments annulaires (50, 51) respectifs, notamment en un matériau élastique,
et sachant que les deux éléments annulaires sont implantés, respectivement, au-dessus et au-dessous d'un canal de sortie (33, 34, 35, 36).

2. Laser à gaz selon la revendication 1, **caractérisé par le fait que** le motif (41, 42) à rainurage en chevrons du palier axial à gaz (45) présente une région intermédiaire (43) radialement centrale, non pourvue de rainures.

3. Laser à gaz selon l'une des revendications précédentes, **caractérisé par le fait que** la profondeur du rainurage décroît, notamment en direction de l'arbre (17).

4. Laser à gaz selon l'une des revendications précédentes, **caractérisé par le fait que** la profondeur du rainurage décroît le long de la rainure (40) et notamment, à chaque fois, en direction d'une région (43) non pourvue de rainures et interposée, dans le sens radial, entre les deux motifs rainurés du motif (41, 42) à rainurage en chevrons.

5. Laser à gaz selon l'une des revendications précédentes, **caractérisé par le fait que** la profondeur de rainurage du motif (37, 38) à rainurage en chevrons décroît le long de la rainure, notamment en direction d'une région intermédiaire (39) non pourvue de rainures et interposée entre les deux motifs rainurés dudit motif (37, 38) à rainurage en chevrons.

6. Laser à gaz selon la revendication 5, **caractérisé par le fait que** la profondeur du rainurage, dans le motif (37, 38) à rainurage en chevrons occupant une position axialement décalée, décroît à chaque fois de façon continue.

7. Laser à gaz selon la revendication 5, **caractérisé par le fait que** la profondeur du rainurage, dans le motif (37, 38) à rainurage en chevrons occupant une position axialement décalée, décroît à chaque fois de manière étagée.

8. Laser à gaz selon l'une des revendications précédentes, **caractérisé par le fait que** la profondeur du rainurage est inférieure à environ 50 micromètres, toutefois supérieure à environ 5 micromètres, inférieure à 25 micromètres et supérieure à 10 micromètres avec préférence particulière.

9. Laser à gaz selon l'une des revendications précédentes, **caractérisé par le fait que** les rainures (40, 44) sont pratiquées au moyen d'un laser à impulsions ultracourtes.

10. Laser à gaz selon l'une des revendications précédentes, **caractérisé par le fait qu'**au moins l'une des surfaces d'appui (26, 27, 48, 49) du palier axial à gaz (45) est de réalisation convexe.
